# EUROPÄISCHE PATENTSCHRIFT

(11) **EP 0 708 145 B1**
(45) Veröffentlichungstag und Bekanntmachung des Hinweises auf die Patenterteilung: **28.01.1998**
(21) Anmeldenummer: 95114707.3
(22) Anmeldetag: 19.09.1995
(51) Int. Cl.: C08L 51/00

(54) **Thermoplastische Formmassen**
Thermoplastic moulding compositions
Masses de moulage thermoplastiques

(30) Priorität: 20.10.1994 DE 4437501
(43) Veröffentlichungstag der Anmeldung: 24.04.1996
(73) Patentinhaber: BASF AKTIENGESELLSCHAFT, 67056 Ludwigshafen (DE)
(72) Erfinder: Güntherberg, Norbert, Dr., D-67346 Speyer (DE); Weber, Martin, Dr., D-67433 Neustadt (DE); Gruber, Freddy, Dr., D-76877 Offenbach (DE); Lindenschmidt, Gerhard, Dr., D-69181 Leimen (DE)

(56) Entgegenhaltungen:
- EP-A- 0 318 793
- DE-A- 4 211 412
- FR-A- 2 250 802
- DATABASE "CHEMICAL ABSTRACTS" (DATEN- ANBIETER: STN), Abs. 123: 58 235, Colombus OH, USA; & JP-A-07 082 387(Asahi Chemical) 28 März 1995

## Beschreibung

Die vorliegende Erfindung betrifft thermoplastische Formmassen aus
A) 30 bis 98 Gew.-% eines partikelförmigen Pfropfpolymerisates aus
   a_{K}) 30 bis 90 Gew.-% eines partikelförmigen kautschukelastischen Pfropfkerns, erhältlich durch Copolymerisation von
      a_{K}/1) 80 bis 99,99 Gew.-% eines (C₁-C₁₀-Alkyl)esters der Acrylsäure,
      a_{K}/2) 0,01 bis 20 Gew.-% eines vernetzenden Monomeren, und
      a_{K}/3) 0 bis 20 Gew.-% von einem oder mehreren weiteren Monomeren,
   a_{S}) 10 bis 70 Gew.-% einer Pfropfschale aus
      a_{S}/1) 50 bis 100 Gew.-% einer Styrolverbindung der allgemeinen Formel 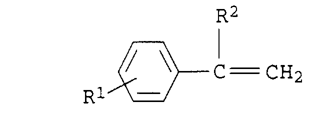 in der R¹ und R² für Wasserstoff oder C₁-C₈-Alkyl stehen, und/oder eines (C₁-C₈-Alkyl)esters der Acrylsäure oder Methacrylsäure, und
      a_{S}/2) 0 bis 50 Gew.-% von einem oder mehreren weiteren Monomeren,
B) 1 bis 50 Gew.-% eines thermoplastischen Polymerisates aus
   b₁) 50 bis 100 Gew.-% Styrol und/oder α-Methylstyrol,
   b₂) 0 bis 50 Gew.-% Acrylnitril, und
   und
C) 1 bis 70 Gew.-% eines Copolymeren aus
   c₁) 30 bis 90 Gew.-% Styrol und/oder α-Methylstyrol,
   c₂) 10 bis 70 Gew.-% Butadien, und
   c₃) 0 bis 30 Gew.-% von einem oder mehreren weiteren Monomeren
      i) welches aufgebaut ist aus einem Block X, erhalten durch Polymerisation von Monomeren c2) und, falls vorhanden, c3), und einem Block Y, erhalten durch Polymerisation von Monomeren c1) und, falls vorhanden, c3),
         oder
      ii) ein Polymeres ist, welches von einem butadienreichen Ausgangssegment ausgehend, entlang der Kette einen steigenden Styrolgehalt aufweist und schließlich in einem Homo-Polystyrol-Endsegment endet,
         oder
      iii) aufgebaut ist aus Polymeren sternförmiger Struktur, erhalten durch Verknüpfung mehrerer Polymerketten aus Monomeren cl) bis c3) in den vorstehend genannten Mengen über polyfunktionelle Moleküle,
         und
   in welchem die olefinischen Doppelbindungen vollständig oder nahezu vollständig hydriert wurden.

Des weiteren betrifft die Erfindung solche Formmassen, in denen die Komponente C nach einem speziellen Verfahren herstellt wird, die Verwendung dieser Formmassen zur Herstellung von Folien und Formkörpern sowie Folien und Formkörper aus diesen Formmassen.

Kunststoffolien haben vielfältige Einsatzgebiete. Bestimmte Folien, insbesondere flexible Folien mit lederartigem Aussehen, werden in großem Umfang bei der Innenraumgestaltung, beispielsweise von Kraftwagen, oder als Lederersatz verwendet. Sie werden meist durch Kalandrieren oder Extrusion hergestellt.

Hauptbestandteil dieser Folien ist derzeit zumeist Polyvinylchlorid (PVC), welches Weichmacher und häufig auch noch andere Vinylpolymerisate enthält. Die Folien sind jedoch nur bedingt alterungsstabil, und außerdem können die mitverwendeten Weichmacher im Laufe der Zeit ausschwitzen.

Aus der EP-A 526 813 sind thermoplastische Formmassen aus einem hochvernetzten Acrylatkautschuk mit einer Pfropfhülle aus Methylmethacrylat oder Styrol/Acrylnitril, einem teilvernetzten Acrylatkautschuk, einem Ethylen/Vinylacetat-Copolymerisat sowie gegebenenfalls einem weiteren Polymerisat auf Basis von Styrol und/oder Acrylverbindungen bekannt. Unter den Bedingungen der Formgebung, beispielsweise zu Folien, neigen diese Massen jedoch zu unerwünschten Verfärbungen.

In der DE-A 42 11 412 werden als Folienmaterial Mischungen aus Styrol/Acrylnitril-Polymerisaten und Thermoplasten empfohlen, die eine Pfropfhülle aus einem elastomeren Polymerisat haben. Die Herstellung derartiger Pfropfpolymerisate ist jedoch verfahrenstechnisch aufwendig, so daß es schwierig ist, gleichbleibende Produktqualitäten zu erhalten.

Das ältere Recht (gemäß Art. 54 (3) EPÜ) WO 95/01400 offenbart Formkörper aus einem Kunststoff, der Acrylnitril, Styrol und Acrylester (ASA) und einen oder mehrere Weichmacher enthält, wobei der Weichmacher ein hydriertes Dreiblockcopolymer des Typs Styrol/Butadien/Styrol sein kann.

Die Verarbeitungseigenschaften der Formmassen und die Gebrauchseigenschaften der Formkörper sind jedoch nicht in vollem Umfang zufriedenstellend.

Die Schrift FR-A 2 250 802 lehrt Formmassen, enthaltend ein Polymerisat aus vinylaromatischen Monomeren, einen mit Vinylaromat gepfropften Dienkautschuk und ein Blockcopolymeres aus Vinylaromat-Blöcken und Dien-Blöcken.

In der Schrift EP-A 318 793 werden Formmassen offenbart, die syndiotaktisches Polystyrol, einen mit Vinylmonomeren gepfropften Acrylat- oder Dienkautschuk, und ein Blockcopolymeres, enthaltend Blöcke aus ataktischem Polystyrol und (gegebenenfalls hydrierte) Blöcke aus Dienen, enthalten.

Der Erfindung lagen thermoplastische Formmassen als Aufgabe zugrunde, die leicht in gleichbleibender Qualität herstellbar und ohne Qualitätsverlust, beispielsweise Verfärbungen, zu Formkörpern, speziell zu Folien, weiterverarbeitbar sind.

Demgemäß wurden die eingangs definierten thermoplastischen Formmassen gefunden.

Weiterhin wurden Formmassen gefunden, in denen das Ausgangspolymerisat der Komponente C durch anionische Polymerisation hergestellt wurde. Außerdem wurde die Verwendung der Polymermischung zur Herstellung von Folien und Formkörpern gefunden sowie Folien und Formkörper aus diesen Massen.

Die Komponente A) ist in den erfindungsgemäßen Formmassen, bezogen auf die Summe der Komponenten A), B) und C), mit einem Anteil von 30 bis 98, bevorzugt 40 bis 90 und besonders bevorzugt 50 bis 82 Gew.-% enthalten. Bei dieser Komponente handelt es sich um ein partikelförmiges Pfropfcopolymerisat, das aus einem kautschukelastischen Pfropfkern a_{K}) ("Weichkomponente") und einer darauf gepfropften Schale a_{S}) ("Hartkomponente") aufgebaut ist.

Der Pfropfkern a_{K}) ist mit einem Anteil von 30 bis 90, bevorzugt 40 bis 80 und insbesondere 50 bis 75 Gew.-%, bezogen auf die Komponente A), enthalten.

Man erhält den Pfropfkern a_{K}) durch Polymerisation eines Monomerengemisches aus, bezogen auf a_{K})
a_{K}/1) 80 bis 99,99, bevorzugt 85 bis 99,5 und besonders bevorzugt 90 bis 99 Gew.-% eines (C₁-C₁₀-Alkyl)esters der Acrylsäure,
a_{K}/2) 0,01 bis 20, bevorzugt 0,5 bis 10 und besonders bevorzugt 1 bis 5 Gew.-% eines vernetzenden Monomeren, und
a_{K}/3) 0 bis 20, bevorzugt 0 bis 5 Gew.-% von einem oder mehreren weiteren Monomeren.

Als Acrylsäurealkylester a_{K}/1) eignen sich vor allem solche, die sich vom Ethanol, vom 2-Ethylhexanol und besonders vom n-Butanol ableiten.

Vernetzende Monomere a_{K}/2) sind bi- oder polyfunktionelle Comonomere, beispielsweise Butadien und Isopren, Divinylester von Dicarbonsäuren wie der Bernsteinsäure und Adipinsäure, Diallyl-und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols der nachstehenden Formel 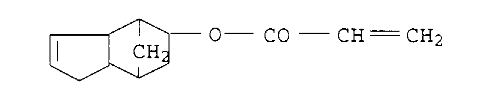 der unter dem Namen Dihydrodicyclopentadienylacrylat bekannt ist, sowie die Allylester der Acrylsäure und der Methacrylsäure.

Der Bestandteil a_{K}) der Formmassen kann außerdem auf Kosten der Monomeren a_{K}/1) und a_{K}/2) weitere Monomere a_{K}/3) enthalten, welche die mechanischen und thermischen Eigenschaften des Kerns in einem gewissen Bereich variieren. Als Beispiele für solche monoethylenisch ungesättigten Comonomere seien genannt:
vinylaromatische Monomere wie Styrol, Styrolderivate der allgemeinen Formel I 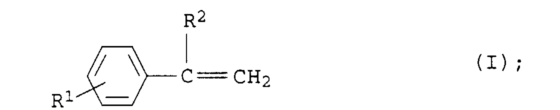 in der R¹ und R² für Wasserstoff oder C₁-C₈-Alkyl stehen;
Methacrylnitril, Acrylnitril;
Acrylsäure, Methacrylsäure, weiterhin Dicarbonsäuren wie Maleinsäure und Fumarsäure sowie deren Anhydride wie Maleinsäureanhydrid;
Stickstoff-funktionelle Monomere wie Dimethylaminoethylacrylat, Diethylaminoethylacrylat, Vinylimidazol, Vinylpyrrolidon, Vinyl- caprolactam, Vinylcarbazol, Vinylanilin, Acrylamid;
C₁-C₄-Alkylester der Methacrylsäure wie Methylmethacrylat, Ethylmethacrylat, n-Propylmethacrylat, i-Propylmethacrylat, n-Butylmethacrylat, Isobutylmethacrylat, sek.-Butylmethacrylat, tert.- Butylmethacrylat sowie Hydroxyethylacrylat;
aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat; ungesättigte Ether wie Vinylmethylether sowie Mischungen dieser Monomeren.
Die Pfropfschale a_{S}) wird erhalten durch Polymerisation eines Monomerengemisches aus, bezogen auf a_{S}),
a_{S}/1) 50 bis 100, bevorzugt 60 bis 95 und besonders bevorzugt 65 bis 85 Gew.-% einer Styrolverbindung der allgemeinen Formel I 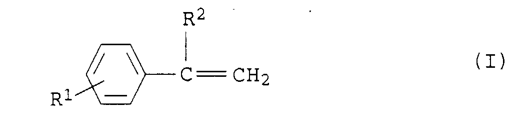 in der R¹ und R² für Wasserstoff oder C₁-C₈-Alkyl stehen und/oder eines (C₁-C₈-Alkyl)esters der Acrylsäure oder Methacrylsäure
a_{S}/2) 0 bis 50, vorzugsweise 15 bis 35 Gew.-% von einem oder meheren weiteren monomeren.

Als Styrolverbindung der allgemeinen Formel (I) (Komponente a_{S}/1)) setzt man vorzugsweise Styrol, α-Methylstyrol sowie außerdem mit C₁-C₈-Alkyl kernalkylierte Styrole wie p-Methylstyrol oder tert.-Butylstyrol, ein. Styrol ist besonders bevorzugt.

Anstelle der Styrolverbindungen oder in Mischung mit ihnen kommen C₁- bis C₈-Alkylester der Acrylsäure und/oder Methacrylsäure in Betracht, besonders solche, die sich vom Methanol, Ethanol, n- und iso-Propanol, sek.-, tert.- und iso-Butanol, Pentanol, Hexanol, Heptanol, Octanol und 2-Ethylhexanol und vor allem vom n-Butanol ableiten. Besonders bevorzugt ist Methylmethacrylat.

Weiterhin kann die Schale a_{S}) auf Kosten der Monomeren a_{S}/1) aus weiteren Comonomeren a_{S}/2) aufgebaut sein. Für die Komponente a_{S}/2) gelten die gleichen Empfehlungen wie für die Komponente a_{K}/3), wobei Maleinsäureanhydrid sowie N-substituierte Maleinimide wie N-Methyl-, N-Phenyl- und N-Cyclohexylmaleinimid als weitere Monomere genannt seien. Diese sowie insbesondere Acrylnitril werden bevorzugt verwendet.

Vorzugsweise ist die Pfropfhülle a_{S}) aus Styrol oder Methylmethacrylat aufgebaut, oder aus einer Mischung aus 40 bis 90 Gew.-% Methylmethacrylat und dem Rest Acrylnitril oder einer Mischung aus 65 bis 85 Gew.-% Styrol und dem Rest Acrylnitril.

Die Pfropfpolymerisate A) sind in an sich bekannter Weise erhältlich, vorzugsweise durch Emulsionspolymerisation bei 30 bis 80°C. Hierfür eignen sich als Emulgatoren beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze von Alkylsulfonaten oder Fettsäuren mit 10 bis 18 Kohlenstoffatomen.

Vorzugsweise verwendet man zur Herstellung der Dispersion soviel Wasser, daß die fertige Dispersion einen Feststoffgehalt von 20 bis 50 Gew.-% hat.

Als Polymerisationsinitiatoren kommen vorzugsweise Radikalbildner, beispielsweise Peroxide wie bevorzugt Peroxosulfate und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden. Ferner kann man Molekulargewichtsregler wie z.B. Ethylhexylthioglycolat, t-Dodecylmercaptan, Terpinole und dimeres α-Methylstyrol mitverwenden.

Zur Einhaltung eines konstant bleibenden pH-Wertes, der vorzugsweise bei 6 bis 9 liegt, kann man Puffersubstanzen wie Na₂HPO₄/NaH₂PO₄ oder Natriumhydrogencarbonat mitverwenden.

Emulgatoren, Initiatoren, Regler und Puffersubstanzen werden in den üblichen Mengen eingesetzt, so daß sich nähere Angaben hierzu erübrigen.

Man kann den Pfropfkern besonders bevorzugt auch durch Polymerisation der Monomeren a_{K}) in Gegenwart eines feinteiligen Kautschuklatex herstellen (sog. "Saatlatex-Fahrweise" der Polymerisation).

Prinzipiell ist es auch möglich, die Pfropfgrundlage nach einem anderen Verfahren als dem der Emulsionspolymerisation herzustellen, z.B. durch Masse- oder Lösungspolymerisation, und die erhaltenen Polymerisate nachträglich zu emulgieren. Auch die Mikrosuspensionspolymerisation ist geeignet, wobei bevorzugt öllösliche Initiatoren wie Lauroylperoxid und t-Butylperpivalat verwendet werden. Die Verfahren hierfür sind bekannt.

Vorzugsweise stimmt man die Reaktionsbedingungen in an sich bekannter Weise so aufeinander ab, daß die Polymerisat-Teilchen einen möglichst einheitlichen Durchmesser d₅₀ im Bereich von 60 bis 1500, besonders von 150 bis 1000 nm haben.

Anstelle eines einheitlichen Pfropfpolymerisates A) kann man zur Herstellung der erfindungsgemäßen thermoplastischen Massen auch verschiedene dieser Polymerisate verwenden, vor allem solche mit deutlich unterschiedlicher Teilchengröße. Derartige Mischungen mit bimodaler Größenverteilung bieten verfahrenstechnische Vorteile bei der Weiterverarbeitung. Geeignete Teilchendurchmesser liegen im Bereich von 60 bis 200 nm einerseits und 300 bis 1000 nm andererseits.

Weiterhin eignen sich auch Pfropfpolymerisate mit mehreren "weichen" und "harten" Schalen, z.B. des Aufbaus a_{K}) -a_{S}) -a_{K}) -a_{S}) oder a_{S}) -a_{K}) -a_{S}), vor allem im Falle größerer Teilchen.

Soweit bei der Pfropfung nicht gepfropfte Polymere aus den Monomeren a_{S}) entstehen, werden diese Mengen, die in der Regel unter 10 Gew.-% von a_{S}) liegen, der Masse der Komponente A) zugeordnet.

Die Komponente B) der erfindungsgemäßen Formmasse ist mit einem Anteil von 1 bis 50, bevorzugt 5 bis 40 und besonders bevorzugt 10 bis 30 Gew.-%, bezogen auf die Summe der Komponenten A), B) und C), enthalten. Der Bestandteil B) ist ein thermoplastisches Polymerisat, das aus
b₁) 50 bis 100, bevorzugt 55 bis 95 und besonders bevorzugt 60 bis 85 Gew.-% Styrol oder α-Methylstyrol,
b₂) 0 bis 50, bevorzugt 5 bis 45 und besonders bevorzugt 15 bis 40 Gew.-% Acrylnitril, sowie
b₃) 0 bis 50, bevorzugt 0 bis 40 Gew.-% von einem oder mehreren weiteren Monomeren,

jeweils bezogen auf die Komponente B), besteht. Als Monomere b₃) kommen diejenigen in Betracht, die für die Komponente a_{K}/3) und a_{S}/2) genannt wurden.

Ein bevorzugtes Polymerisat B) besteht aus 75 bis 95 Gew.-% Styrol und 5 bis 25 Gew.-% Acrylnitril, bezogen auf B).

Die Polymeren B), die wegen ihrer Hauptkomponenten Styrol und Acrylnitril allgemein auch als SAN-Polymere bezeichnet werden, sind bekannt und z.T. auch handelsüblich. Sie haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse von etwa 40000 bis 200000. Man erhält sie in bekannter Weise durch Substanz-, Lösungs-, Suspensions-, Fällungs- oder Emulsionspolymerisation. Einzelheiten dieser Verfahren sind z.B. im Kunststoffhandbuch, Hrg. R. Vieweg und G. Daumiller, Bd. V "Polystyrol", Carl-Hanser-Verlag München 1969, S. 118 ff beschrieben.

Der Anteil der Komponente C) an den Formmassen beträgt, bezogen auf die Summe der Komponenten A), B) und C), 1 bis 70, bevorzugt 5 bis 50 und besonders bevorzugt 8 bis 40 Gew.-%. Komponente C) ist ein Copolymer, das aus
c₁) 30 bis 90, bevorzugt 40 bis 80 und besonders bevorzugt 45 bis 70 Gew.-% Styrol und/oder α-Methylstyrol,
c₂) 10 bis 70, bevorzugt 20 bis 60 und insbesondere bevorzugt 30 bis 55 Gew.-% Butadien, und
c₃) 0 bis 20, bevorzugt 0 bis 10 Gew.-% von einem oder mehreren weiteren Monomeren
besteht, in dem die olefinischen Doppelbindungen vollständig oder nahezu vollständig hydriert wurden.

Als Komponente c₃) kommen alle Verbindungen, die anionisch polymerisierbar sind, sowie deren Mischungen in Betracht, insbesondere Isopren, Alkylmethacrylate wie z.B. Methylmethacrylat und tert.-Butylmethacrylat, α-Methylstyrol, Dimethylbutadien, sowie besonders bevorzugt kernsubstituierte Styrole und 1,1-Diphenylethylen.

Die Copolymerisate C) sind bekannt, z.T. auch im Handel erhältlich (z.B. Kraton® von Shell Chemicals und Glissoviscal® von BASF) und in an sich bekannter Weise zugänglich.

Vorzugsweise stellt man die Copolymerisate nach der Methode der anionischen Polymerisation in Lösung her, wobei als Starter hauptsächlich metallorganische Verbindungen wie beispielsweise sek.-Butyllithium in Betracht kommen. Die anionische Polymerisation liefert, wie es in der Regel erwünscht ist, Polymerisate, die im wesentlichen unverzweigt sind. Unterwirft man ein Gemisch aus Styrol und Butadien der Polymerisation, so erhält man je nach den gewählten Copolymerisations-Bedingungen Polymerisate mit charakteristischer Verteilung der Monomereneinheiten.

In der Regel ist Blockcopolymerisaten der Vorzug zu geben, deren eines Kettenende von einem Block aus Styrol und deren anderes Kettenende von einem Block aus Butadien gebildet wird. Diese Blöcke können von Polymeren mit statistischer Verteilung voneinander getrennt sein, und ferner können die Blöcke auch in untergeordneten Mengen Einheiten des jeweils anderen Monomeren enthalten.

Polymerisiert man ein Gemisch von Styrol und Butadien anionisch mit einem der genannten Initiatoren unter Mitverwendung geringer Mengen eines Ethers, insbesondere Tetrahydrofuran (THF) als Cokatalysator, so entstehen Polymerketten, in denen weder Blöcke noch eine vollständig statistische Verteilung der Bausteine vorhanden sind, sondern der Anteil der einen Komponente entlang der Kette in einer Richtung zunimmt und der Anteil der anderen Komponente in der gleichen Richtung abnimmt:

Zu Beginn der Polymerisation wird bevorzugt Butadien neben wenig Styrol in die entstehenden Ketten eingebaut. Sie sind demnach butadienreich. Mit Fortschreiten der Reaktion und dadurch sinkendem Gehalt der Reaktionsmischung an Butadienmonomeren werden vermehrt Styrolmonomere polymerisiert - die Kette wird styrolreicher -, bis schließlich nach vollständigem Verbrauch des Butadiens ein Endsegment aus Homo-Polystyrol gebildet wird. Einzelheiten des Verfahrens sind in der DE-A 31 06 959 beschrieben.

Gut geeignet sind auch Polymere mit sternförmiger Struktur, die man durch Verknüpfung mehrerer Polymerketten, hauptsächlich von Blockpolymerisaten des Typs Styrolblock/Butadienblock/Styrolblock ("Dreiblock-Polymer"), über polyfunktionelle Moleküle erhält. Geeignete Verknüpfungsmittel sind z.B. Polyepoxide, beispielsweise epoxidiertes Leinsamenöl, Polyisocyanate wie Benzo-1,2,4-triisocyanat, Polyketone wie 1,3,6-Hexantrion und Polyanhydride, außerdem Dicarbonsäureester wie Diethyladipat, sowie Siliciumhalogenide wie SiCl₄, Metallhalogenide wie TiCl₄ und Polyvinylaromaten wie Divinylbenzole. Näheres über die Herstellung dieser Polymeren ist z.B. der DE-A 26 10 068 zu entnehmen.

Weiterhin können die genannten Polymere C) auch weitere Monomere c₃) einpolymerisiert werden, wofür die für c₃) genannten, anionisch polymerisierbaren Verbindungen in Betracht kommen.

Als Lösungsmittel eignen sich wasserfreie Flüssigkeiten wie Alkane und cycloaliphatische und aromatische Kohlenwasserstoffe. Bevorzugt wird Cyclohexan verwendet.

Vorzugsweise nimmt man die anionische Polymerisation bei -20 bis 150°C vor.

Die Reaktion wird in an sich bekannter Weise durch Zugabe einer polaren Verbindung wie Wasser oder eines Alkohols abgebrochen.

Die Hydrierung der im Polymerisat noch vorhandenen olefinischen Doppelbindungen, die vom Butadien stammen, nimmt man ebenfalls in an sich bekannter Weise vor, und zwar bevorzugt in homogener Phase mit Wasserstoff mittels eines löslichen, selektiv wirkenden Hydrierkatalysators wie einer Mischung von Nickel(II)acetylacetonat und Aluminiumtriisobutyl in einem inerten Lösungsmittel wie Hexan. Die Hydriertemperatur beträgt vorzugsweise 20 bis 200°C, und für den Wasserstoffdruck empfiehlt sich ein Bereich von 6 bis 30 bar. Eine vollständige Hydrierung der nichtaromatischen Doppelbindungen ist nicht erforderlich, viel mehr genügt ein Hydrierungsgrad von 95 %. Näheres zur Hydrierung ist beispielsweise der bereits erwähnten DE-A 31 06 959 zu entnehmen.

Die Aufarbeitung auf die gewünschten Polymeren, deren Molmasse man vorzugsweise auf 50000 bis 200000, besonders 70000 bis 120000 einstellt, erfolgt wie üblich.

Im Falle der Polymere mit Homo-Polystyrolendblock beträgt dessen Anteil an der Komponente C) 5 bis 30, vorzugsweise 7 bis 25 Gew.-%.

Außer den Komponenten A), B) und C) können die thermoplastischen Formmassen noch Zusatzstoffe wie Gleit- und Entformungsmittel, Pigmente, Farbstoffe, Flammschutzmittel, Antioxidantien, Stabilisatoren gegen Lichteinwirkung, faser- und pulverförmige Füllund Verstärkungsmittel und Antistatika in den für diese Mittel üblichen Mengen enthalten. Besonders im Falle der Herstellung von Folien aus den erfindungsgemäßen Formmassen verwendet man Weichmacher mit, beispielsweise Copolymere einer mittleren Molmasse von 2000 bis 8000 aus 30 bis 70 Gew.-% Ethylenoxid und 70 bis 30 Gew.-% 1,2-Propylenoxid in Mengen von 0,5 bis 10 Gew.-%, bezogen auf die Summe der Komponenten A), B) und C).

Die Herstellung der erfindungsgemäßen Formmassen kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch ohne Schmelzen "kalt" vermischt werden und das pulvrige oder aus Granulaten bestehende Gemisch wird erst bei der Verarbeitung aufgeschmolzen und homogenisiert.

Aus den Formmassen lassen sich Formkörper aller Art, insbesondere Folien, herstellen. Die Herstellung der Folien kann durch Extrudieren, Walzen, Kalandrieren und andere dem Fachmann bekannte Verfahren erfolgen. Die erfindungsgemäßen Formmassen werden dabei durch Erwärmen und/oder Friktion allein oder unter Mitverwendung von weichmachenden oder anderen Zusatzstoffen zu einer verarbeitungsfähigen Folie geformt. Die Verarbeitung derartiger Folien zu Fertigprodukten erfolgt beispielsweise durch Warmformen oder Tiefziehen.

Die Folien haben vielfältige Verwendungsmöglichkeiten, insbesondere in der Automobilindustrie zur Gestaltung des Autoinnenraumes, für Dekorationszwecke, als Lederersatz bei der Herstellung von Koffern und Taschen und in der Möbelindustrie als Überzugsmaterial zur Kaschierung von Möbeloberflächen.

Die erfindungsgemäßen thermoplastischen Formmassen enthalten kein Halogen. Sie sind weitestgehend frei von ausdünstenden oder ausschwitzenden Bestandteilen und zeigen bei der Verarbeitung praktisch keine nachteiligen Veränderungen wie Verfärbungen. Insbesondere haben sie bereits ohne Mitverwendung entsprechender Stabilisatoren oder anderer Zusätze eine hervorragende Wärmealterungsbeständigkeit und Lichtbeständigkeit sowie gute mechanische Eigenschaften.

### Beispiele

Es wurden folgende Bestandteile hergestellt (alle %-Angaben sind Gew.-%)

Herstellung einer Komponente A:
Partikelförmiges Pfropfpolymerisat aus vernetztem Poly-n-Butylacrylat (Kern) und Styrol/Acrylnitril-Copolymer (Schale)

Zu einer Mischung aus 3 g eines Polybutylacrylat-Saatlatex, 100 g Wasser und 0,2 g Kaliumpersulfat wurden im Verlauf von 4 Stunden bei 60°C eine Mischung aus 98 g n-Butylacrylat und 2 g Dihydrodicyclopentadienylacrylat sowie getrennt davon eine Lösung von 1 g Na-C₁₂-C₁₈-Paraffinsulfonat in 50 g Wasser gegeben. Die Polymerisation wurde danach noch für 3 Stunden fortgesetzt. Der mittlere Teilchendurchmesser d₅₀ des entstandenen Latex betrug 430 nm bei enger Verteilung der Teilchengröße (Q = 0,1).

150 g dieses Latex wurden mit 60 g Wasser, 0,03 g Kaliumpersulfat und 0,05 g Lauroylperoxid vermischt, wonach auf die Latexteilchen im Laufe von 3 Stunden bei 65°C zunächst 20 g Styrol und danach im Laufe von weiteren 4 Stunden ein Gemisch aus 15 g Styrol und 5 g Acrylnitril aufgepfropft wurden. Anschließend wurde das Polymerisat mit einer Calciumchloridlösung bei 95°C ausgefällt, abgetrennt, mit Wasser gewaschen und im warmen Luftstrom getrocknet. Der Pfropfgrad des Polymerisates betrug 35 % und die Teilchen hatten einen mittleren Durchmesser d₅₀ von 510 nm.

Das Pfropfpolymerisat setzte sich wie folgt zusammen (gerundete Werte) :
60 Gew.-% eines Pfropfkerns aus Polybutylacrylat, vernetzt,
20 Gew.-% einer inneren Pfropfstufe aus Styrol-Polymer und
20 Gew.-% einer äußeren Pfropfstufe aus Styrol/Acrylnitril-Copolymer im Gewichtsverhältnis S/AN 3:1.

Das anfangs eingesetzte Saat-Polymere wurde nach dem Verfahren der EP-B 6503 (Spalte 12, Zeile 55, bis Spalte 13, Zeile 22) durch Polymerisation von n-Butylacrylat und Tricyclodecenylacrylat in wäßriger Emulsion hergestellt und hatte einen Feststoffgehalt von 40 %.

Die bei der Beschreibung der Komponente A) erwähnte mittlere Teilchengröße ist das Gewichtsmittel der Teilchengrößen.

Der mittlere Durchmesser entspricht dem d₅₀-Wert, demzufolge 50 Gew.-% aller Teilchen einen kleineren und 50 Gew.-% einen größeren Durchmesser haben als derjenige Durchmesser, der dem d₅₀-Wert entspricht. Um die Breite der Teilchengrößenverteilung zu charakterisieren, werden zusätzlich zum d₅₀-Wert oftmals der d₁₀- sowie der d₉₀-Wert angegeben. 10 Gew.-% aller Teilchen sind kleiner und 90 Gew.-% größer als der d₁₀-Durchmesser. Analog haben 90 Gew.-% aller Teilchen einen kleineren und 10 Gew.-% einen größeren Durchmesser als denjenigen, der dem d₉₀-Wert entspricht. Der Quotient Q = (d₉₀-d₁₀)/d₅₀ ist ein Maß für die Breite der Teilchengrößenverteilung. Je kleiner Q ist, desto enger ist die Verteilung.

Herstellung einer Komponente B:
Copolymerisat aus Styrol und Acrylnitril

Es wurde ein Copolymerisat aus 65 Gew.-% Styrol und 35 Gew.-% Acrylnitril (Komponente B-1) bzw. 81 Gew.-% Styrol und 19 Gew.-% Acrylnitril (Komponente B-2) nach dem Verfahren der kontinuierlichen Lösungspolymerisation hergestellt, wie es im Kunststoff-Handbuch, Hrg. R. Vieweg und G. Danmiller, Bd. V "Polystyrol", Carl-Hanser-Verlag München 1969, Seite 122 bis 124, beschrieben ist. Die Viskositätszahl VZ (ermittelt nach DIN 53 726 bei 25°C, 0,5 Gew.-% in Dimethylformamid) betrug 80 ml/g (B-1) bzw. 100 ml/g (B-2).

Herstellung einer Komponente C:
hydriertes Styrol-Butadien-Copolymer

Eine Lösung von 520 g Styrol, 480 g Butadien und 20 ml Tetrahydrofuran in 4 l Cyclohexan wurde bei 0°C zunächst langsam mit sek.-Butyllithium versetzt, um auf diese Weise protonenaktive Verunreinigungen zu desaktivieren. Nach dem Anspringen der Polymerisationsreaktion, erkenntlich an einem Temperaturanstieg von 0,2°C, wurden sofort 0,8 g sek.-Butyllithium zugefügt. Die Polymerisationswärme wurde durch Siedekühlung abgeführt. Dabei wurde die Kühlleistung so eingestellt, daß die Temperatur innerhalb von 30 min auf 120°C anstieg. Diese Temperatur wurde weitere 10 min gehalten, wonach die Polymerisation durch Zugabe von 1 g Ethanol abgebrochen wurde.

Zur Hydrierung wurden der erhaltenen Polymerlösung eine Suspension von 1,5 g Nickel(II)acetylacetonat in 30 ml Toluol und 34 ml einer 20 gew.-%igen Lösung von Aluminiumtriisobutyl in Hexan zugefügt, wonach man sie 60 min lang bei 80 bis 110°C einem Wasserstoffdruck von 15 bar aussetzte.

Die Aufarbeitung des Reaktionsgemisches auf das hydrierte Polymerisat wurde wie üblich vorgenommen, wobei das Lösungsmittel zweckmäßigerweise in einer Direktentgasungsanlage entfernt wurde.

Der Styrolgehalt des enthaltenen Polymeren, das als Glissoviscal® SG (Fa. BASF) im Handel erhältlich ist, betrug 52 Gew.-%, bezogen auf die Gesamtmasse des Polymeren. Der Anteil des Homo-Polystyrol-Endblocks am Polymeren betrug 13 Gew.-%. Die mittlere Molmasse des auf die beschriebene Weise hergestellten Produktes war 80000, ermittelt durch Gelpermeationschromatographie.

Erfindungsgemäße Massen und ihre Eigenschaften

Aus den Komponenten A, B-1 bzw. B-2 und C wurden Mischungen hergestellt, die bei 200°C auf einem Walzwerk zu Folien von 1 mm Stärke verarbeitet wurden.

Folgende Eigenschaften der Folien wurden ermittelt:
- Zugfestigkeit: Der Zugversuch wurde nach DIN 53 504 an Streifen vorgenommen, die aus der Folie ausgestanzt wurden.
- Reißdehnung: die Dehnung bei Anlegen der Reißkraft wurde nach DIN 53 504 im Zugversuch bestimmt und in % der ursprünglichen Abmessung des Streifens angegeben.
- Weiterreißfestigkeit: es wurde ein Weiterreißversuch nach DIN 43 515 an ausgestanzten Streifen vorgenommen.
- Shore-Härte: es wurde die Shore-Härte nach DIN 43 505 mit dem Prüfgerät D bestimmt.
- Wärmeformbeständigkeit: sie wurde nach DIN 53 460 als Vicat-Zahl mit der Meßmethode A ermittelt.

Die Zusammensetzungen der hergestellten Folien und die Versuchsergebnisse sind in der Tabelle 1 zusammengestellt.

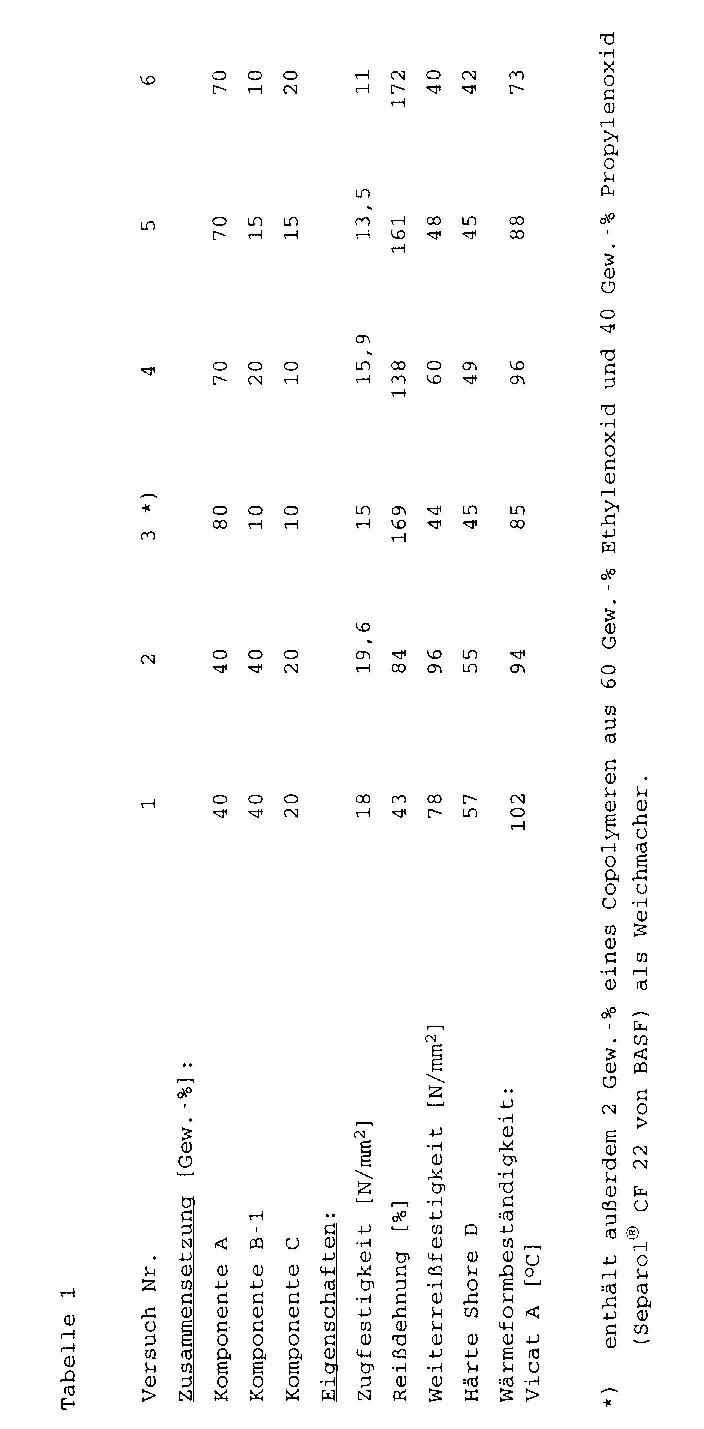

Die Wärmealterungsbeständigkeit wurde ebenfalls an Streifen bestimmt, die aus Folien von 1 mm Stärke ausgestanzt wurden. Die Streifen wurden einer Wärmelagerung von 300 bzw. 500 Stunden unterzogen. Anschließend wurde zur Ermittlung der Zugfestigkeit und der Reißdehnung ein Zugversuch nach DIN 53 504 durchgeführt.

Zum Vergleich wurde der Zugversuch an Streifen durchgeführt, die nicht der Wärmelagerung unterzogen wurden.

Außerdem wurde die Farbabweichung nach Wärmelagerung visuell beurteilt.

Tabelle 2 faßt die Zusammensetzung der hergestellten Folien und die Versuchsergebnisse zusammen.

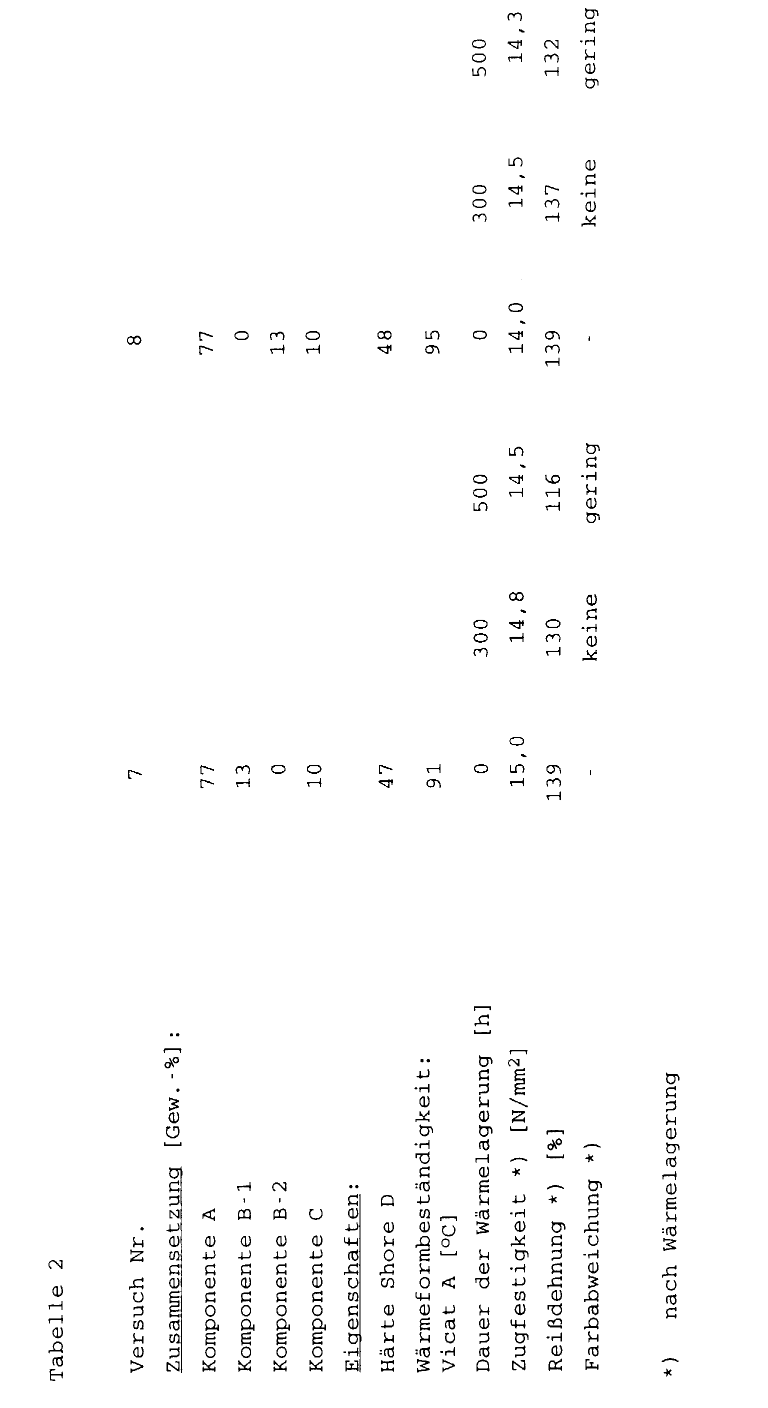

## Patentansprüche

1. Thermoplastische Formmassen aus
A) 30 bis 98 Gew.-% eines partikelförmigen Pfropfpolymerisates aus
a_{K}) 30 bis 90 Gew.-% eines kautschukelastischen Pfropf) kerns, erhältlich durch Copolymerisation von
a_{K}/1) 80 bis 99,99 Gew.-% eines (C₁-C₁₀-Alkyl)esters der Acrylsäure,
a_{K}/2) 0,01 bis 20 Gew.-% eines vernetzenden Monomeren, und
a_{K}/3) 0 bis 20 Gew.-% von einem oder mehreren weiteren Monomeren,
a_{S}) 10 bis 70 Gew.-% einer Pfropfschale aus
a_{S}/1) 50 bis 100 Gew.-% einer Styrolverbindung der allgemeinen Formel 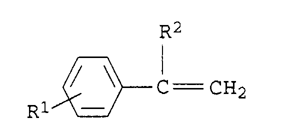 in der R¹ und R² für Wasserstoff oder C₁-C₈-Alkyl stehen, und/oder eines (C₁-C₈-Alkyl)esters der Acrylsäure oder Methacrylsäure, und
a_{S}/2) 0 bis 50 Gew.-% von einem oder mehreren weiteren Monomeren,
B) 1 bis 50 Gew.-% eines thermoplastischen Polymerisates aus
b₁) 50 bis 100 Gew.-% Styrol und/oder α-Methylstyrol,
b₂) 0 bis 50 Gew.-% Acrylnitril, und
b₃) 0 bis 50 Gew.-% von einem weiteren oder mehreren weiteren Monomeren,
und
C) 1 bis 70 Gew.-% eines Copolymeren aus
c₁) 30 bis 90 Gew.-% Styrol und/oder α-Methylstyrol,
c₂) 10 bis 70 Gew.-% Butadien, und
c₃) 0 bis 30 Gew.-% von einem oder mehreren weiteren Monomeren
i) welches aufgebaut ist aus einem Block X, erhalten durch Polymerisation von Monomeren c2) und, falls vorhanden, c3), und einem Block Y, erhalten durch Polymerisation von Monomeren c1) und, falls vorhanden, c3),
oder
ii) ein Polymeres ist, welches von einem butadienreichen Ausgangssegment ausgehend, entlang der Kette einen steigenden Styrolgehalt aufweist und schließlich in einem Homo-Polystyrol-Endsegment endet,
oder
iii) aufgebaut ist aus Polymeren sternförmiger Struktur, erhalten durch Verknüpfung mehrerer Polymerketten aus Monomeren c1) bis c3) in den vorstehend genannten Mengen über polyfunktionelle Moleküle, und
in welchem die olefinischen Doppelbindungen vollständig oder nahezu vollständig hydriert wurden.

2. Thermoplastische Formmassen nach Anspruch 1, in denen das Ausgangspolymerisat aus den Monomeren c₁) bis c₃) der Komponente C) durch anionische Polymerisation hergestellt wurde.

3. Thermoplastische Formmassen nach Anspruch 2, bei denen die anionische Polymerisation zur Herstellung des Ausgangspolymerisates mit Hilfe von Alkyllithiumverbindungen sowie in Gegenwart von Tetrahydrofuran vorgenommen wurde.

4. Thermoplastische Formmassen nach Anspruch 1 bis 3, in denen der Anteil des Homo-Polystyrol-Endsegments an den unter ii) definierten Polymeren 5 bis 30 Gew.-% beträgt.

5. Thermoplastische Formmassen nach Anspruch 2, in denen die Komponente B ein Copolymerisat aus 75 bis 95 Gew.-% Styrol und 5 bis 25 Gew.-% Acrylnitril ist.

6. Thermoplastische Formmassen nach den Ansprüchen 1 bis 5, enthaltend zusätzlich zu den Komponenten A) bis C) 0,5 bis 10 Gew.-% eines Copolymerisates einer mittleren Molmasse von 2000 bis 8000 aus 30 bis 70 Gew.-% Ethylenoxid und 70 bis 30 Gew.-% 1,2-Propylenoxid.

7. Verwendung der thermoplastischen Formmassen gemäß den Ansprüchen 1 bis 6 zur Herstellung von Folien und Formkörpern.

8. Folien und Formkörper aus den thermoplastischen Formmassen gemäß den Ansprüchen 1 bis 6.

9. Verwendung der Folien und Formkörper gemäß Anspruch 8 für den Automobil-Innenausbau.

## Claims

1. A thermoplastic molding material comprising
A) from 30 to 98 % by weight of a particulate graft polymer of
a_{K}) from 30 to 90 % by weight of an elastomeric graft core, obtainable by copolymerization of
a_{K}/1) from 80 to 99.99 % by weight of a c₁-c₁₀-alkyl ester of acrylic acid,
a_{K}/2) from 0.01 to 20 % by weight of a crosslinking monomer and
a_{K}/3) from 0 to 20 % by weight of one or more further monomers,
and
a_{S}) from 10 to 70 % by weight of a graft shell of
a_{S}/1) from 50 to 100 % by weight of a styrene compound of the formula 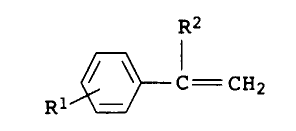 where R¹ and R² are each hydrogen or C₁-C₈-alkyl, and/or of a C₁-C₈-alkyl ester of acrylic acid or methacrylic acid, and
a_{S}/2) from 0 to 50 % by weight of one or more further monomers,
B) from 1 to 50 % by weight of a thermoplastic polymer of
b₁) from 50 to 100 % by weight of styrene and/or α-methylstyrene,
b₂) from 0 to 50 % by weight of acrylonitrile and
b₃) from 0 to 50 % by weight of one or more further monomers,
and
C) from 1 to 70 % by weight of a copolymer of
c₁) from 30 to 90 % by weight of styrene and/or α-methylstyrene,
c₂) from 10 to 70 % by weight of butadiene and
c₃) from 0 to 30 % by weight of one or more further monomers,
i) which is composed of a block X, obtained by polymerization of monomers c2) and, if present, c3), and a block Y, obtained by polymerization of monomers c1) and, if present, c3),
or
ii) is a polymer which, starting from a butadiene-rich strating segment, has an increasing styrene context along the chain and finally ends in a homopolyetyrene end segment
or
iii)is composed of polymers having a star-like structure, obtained by linking a plurality of polymer chains of monomers c1) to c3) in the abovementioned amounts via polyfunctional molecules,
and in which all or virtually all of the olefinic double bonds have been hydrogenated.

2. A thermoplastic molding material as claimed in claim 1, in which the starting polymer was prepared from the monomers c₁) to c₃) of component C) by anionic polymerization.

3. A thermoplastic molding material as claimed in claim 2, in which the anionic polymerization for the preparation of the starting polymer was carried out with the aid of an alkyllithium compound and in the presence of tetrahydrofuran.

4. A thermoplastic molding material as claimed in any of claims 1 to 3, in which the amount of the homopolystyrene terminal segment in the polymers defined under ii) is from 5 to 30 % by weight.

5. A thermoplastic molding material as claimed in claim 2, in which the component B is a copolymer of from 75 to 95 % by weight of styrene and from 5 to 25 % by weight of acrylonitrile.

6. A thermoplastic molding material as claimed in any of claims 1 to 5, containing, in addition to the components A) to C), from 0.5 to 10 % by weight of a copolymer having an average molecular weight of from 2000 to 8000 and comprising from 30 to 70 % by weight of ethylene oxide and from 70 to 30 % by weight of 1,2-propylene oxide.

7. Use of a thermoplastic molding material as claimed in any of claims 1 to 6 for the production of films and moldings.

8. A film or molding comprising a thermoplastic molding material as claimed in any of claims 1 to 6.

9. Use of the film or molding as claimed in claim 8 for automotive interior finishes.

## Revendications

1. Masses à mouler thermoplastiques, constituées de
A) 30 à 98% en poids d'un polymère de greffage particulaire, formé de
a_{K}) 30 à 90% en poids d'un noyau de greffage présentant l'élasticité du caoutchouc, que l'on obtenir par la copolymérisation de
a_{K}/1) 80 à 99,99% en poids d'un ester alkylique en C₁ à C₁₀ de l'acide acrylique,
a_{K}/2) 0,01 à 20% en poids d'un monomère réticulant et
a_{K}/3) 0 à 20% en poids d'un ou plusieurs autres monomères,
a_{S}) 10 à 70% en poids d'une enveloppe ou gaine de greffage, formée de
a_{S}/1) 50 à 100% en poids d'un composé du styrène de la formule générale 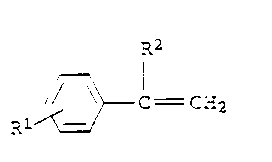 dans laquelle R¹ et R² représentent des atomes d'hydrogène ou des radicaux alkyle en C₁ à C₈ et/ou d'un ester alkylique en C₁ à C₈ de l'acide acrylique ou de l'acide méthacrylique et
a_{S}/2) 0 à 50% en poids d'un ou plusieurs autres monomères,
B) 1 à 50% en poids d'un polymère thermoplastique formé de
b₁ ) 50 à 100% en poids de styrène et/ou d'α-méthylstyrène,
b₂) 0 à 50% en poids d'acrylonitrile et
b₃) 0 à 50% en poids d'un autre ou de plusieurs autres monomères
et
C) 1 à 70% en poids d'un copolymère formé de
c₁ ) 30 à 90% en poids de styrène et/ou d'a-méthylstyrène,
c₂) 10 à 70% en poids de butadiène et
c₃) 0 à 30% en poids d'un ou plusieurs autres monomères,
i) qui est constitué d'une séquence X, que l'on obtient par la polymérisation de monomères c2) et, si présents, c3) et d'une séquence Y, que l'on obtient par la polymérisation de monomères c1) et, si présents, c3),
ou
ii) est un polymère, qui partant d'un segment de départ riche en butadiène, présente le long de la chaîne une teneur en styrène croissante et se termine enfin en un segment final d'homopolystyrène,
ou
iii) est constitué d'une structure polymérique radiale, que l'on obtient par la réticulation de plusieurs chaînes polymériques en monomères c1) à c3) en les proportions précédemment mentionnées sur des molécules polyfonctionnelles
et
dans lequel les doubles liaisons oléfiniques ont été totalement ou pratiquement totalement hydrogénées.

2. Masses à mouler thermoplastiques suivant la revendication 1, dans lesquelles le polymère de départ constitué des monomères c₁ à c₃) du composant C) a été préparé par polymérisation anionique.

3. Masses à mouler thermoplastiques suivant la revendication 2, dans lesquelles la polymérisation anionique pour la préparation du polymère de départ a été entreprise à l'aide de composés d'alkyllithium, comme aussi en présence de tétrahydrofuranne.

4. Masses à mouler thermoplastiques suivant les revendications 1 à 3, dans lesquelles la fraction du segment final d'homopolystyrène du polymère défini sous ii), varie de 5 à 30% en poids.

5. Masses à mouler thermoplastiques suivant la revendication 2, dans lesquelles le composant B est un copolymère constitué de 75 à 95% en poids de styrène et de 5 à 25% en poids d'acrylonitrile.

6. Masses à mouler thermoplastiques suivant les revendications 1 à 5, contenant, complémentairement aux composants A) à C), 0,5 à 10% en poids d'un copolymère d'une masse moléculaire moyenne de 2000 à 8000 et constitué de 30 à 70% en poids d'oxyde d'éthylène et de 70 à 30% en poids d'oxyde de 1,2-propylène.

7. Utilisation des masses à mouler thermoplastiques suivant l'une quelconque des revendications 1 à 6, pour la fabrication de feuilles et d'articles moulés.

8. Feuilles et articles moulés obtenus à l'aide des masses à mouler thermoplastiques suivant l'une quelconque des revendications 1 à 6.

9. Utilisation des feuilles et des articles moulés suivant la revendication 8, pour l'équipement intérieur de véhicules automobiles.
